# EUROPEAN PATENT APPLICATION

(11) **EP 2 604 753 A1**
(43) Date of publication of application: **19.06.2013**
(21) Application number: 11193100.2
(22) Date of filing: 12.12.2011
(51) Int. Cl.: D06M 13/02, D06M 13/224, D06M 13/256, D06M 15/03, D06M 15/53, D06M 15/643, A23L 1/015

(54) **Impregnated nonwoven for degreasing food**

(71) Applicant: Schleppinghoff Consulting - Sonja Ida Schleppinghoff, 50931 Köln (DE)
(72) Inventor: Schleppinghoff, Christof Maria, 50939 Köln (DE); Hentz, Lothar, 48720 Rosendahl (DE)
(74) Representative: Patentanwälte Freischem

(57) **Abstract**

The present invention relates to an impregnated nonwoven for degreasing food, to a process for degreasing food and to a process for manufacturing the impregnated nonwoven.

## Description

The present invention relates to an impregnated nonwoven for degreasing food, to a process for degreasing food and to a process for manufacturing the impregnated nonwoven.

So far, several technical solutions have been proposed to be used in the kitchen for removal of excess oil or fat from food, especially from freshly roasted, boiled or fried food. So far, these solutions of the prior art relied on the particular construction of the products or on the physical properties of the fibers.

DE202011100894U1 describes a nonwoven for degreasing food, which has not been impregnated.

US6152025 describes a fat collection structure and method.

JP2002346380 describes an oil adsorption sheet.

The problem to be solved in the present invention is to provide an improved nonwoven for degreasing food overcoming the shortcomings of the prior art.

The problem according to the present invention is solved in a first embodiment by an impregnated nonwoven for degreasing food, comprising at least a nonwoven and an impregnating composition, wherein the impregnating composition comprises only food grade components and at least an oleophilic substance and an emulsifier.

The term "food grade" is defined as according to EC Regulation No 17812002. In particular "food grade" according to the present invention means the following: all components must be fit for human consumption and according to scientific knowledge all components must not be injurious to health and must be safe. Also, the intended use (in foods) of all components must not represent a health hazard to consumers.

In the embodiments of the prior art, the impregnation has been seen as disadvantageous due to food regulations. Surprisingly, it has been found that even with purely food grade components, an impregnation can improve the oil take up significantly.

Preferably, the oleophilic substance is selected from wax and derivatives, silicone and derivatives, and mixtures thereof.

Particularly, the oleophilic wax may be a paraffin wax, especially comprising a salt of aluminum.

Advantageously, the oleophilic substance has a kinematic viscosity in the range from 50 to 500 mm²/s. The viscosity can be measured according to ASTM D 445 at 20 °C and atmospheric pressure.

Preferably, the emulsifier is selected from thickeners, polysaccharides, surfactants, polysorbate 20, ceteareth 20 or mixtures thereof.

The surfactant according to the present invention may advantageously be selected from calcium lignin sulfonates, copolymer condensates of ethylene oxide and propylene oxide, polyglyceryl-3 stearate or polyglyceryl-5 dioleate.

Preferably, the ratio of emulsifier to oleophilic substance is in a range from 1:1 to 300.000, in particular from 1:10 to 1:2000.

Preferably, the impregnated nonwoven comprises 1 to 30 wt.% impregnating composition.

Preferably, the polysaccharide has a mannose backbone. The polysaccharides may advantageously be a galactomannan. In particular, the ratio of mannose to galactose may be between 3:1 to 5:1.

Preferably, the thermoplastic nonwoven is spunbond, meltblown or a combination thereof. In particular, the thermoplastic nonwoven may be an SMS (spunbond-meltblown-spunbond) nonwoven. This particular type of nonwoven has turned out to be very suitable to for this particular application.

Advantageously, the material of the nonwoven is selected from the group consisting of polypropylene, polyethylene, polyamide, polyester or mixtures thereof. The preferred material is isotactic polypropylene due to its high melting point.

Preferably, the melting point of the material for the nonwoven is above 130 °C. This will lead to less thermoplastic material melting during contact with the food.

Advantageously, the unit weight per area is in a range from 50 to 300 glm², in particular in the range from 100 to 200 g/_{M}². The unit weight per area for a spunbond layer may be in a range from 5 to 30 g/m², in particular in a range from 10 to 20 g/m². The unit weight per area for a meltblown layer may be in a range from 50 to 300 g/m², in particular in a range from 100 to 200 g/m².

The bonding between layers may preferably be facilitated by ultrasonic welding or by a cut & seal process.

The thickness of the impregnated nonwoven according to the present invention may preferably be in a range of from 0.5 to 3 mm. The largest diameter of the impregnated nonwoven according to the present invention may preferably be in a range of from 10 to 50 cm. The impregnated nonwoven according to the present invention may advantageously have a shape selected from oval, square, circle, rectangle, or special shapes like flower-shape, soccer-ball-shape, star-shape, goose-shape or fish-shape.

The overall water content of the impregnated nonwoven according to the present invention may preferably be below 5 wt.%, in particular below 1 wt.%.

The problem according to the present invention is solved by another embodiment by a process for degreasing food, characterized in that the food is contacted with the impregnated nonwoven according to the present invention.

Preferably, the duration of the contact is in a range from 1 to 60 seconds. Advantageously, the impregnated nonwoven according to the present invention is removed from the food after contact. The impregnated nonwoven according to the present invention may be used one-way or several times. The impregnated nonwoven according to the present invention may preferably be pressed onto the food while contacting or vice versa.

The problem according to the present invention is solved by another embodiment by a process for manufacturing the impregnated nonwoven according to the present invention, characterized in that in comprises at least the following steps:
a. contacting a thermoplastic nonwoven with a water based emulsion of the oleophilic substance comprising the emulsifier, and
b. drying the thermoplastic nonwoven.

Contacting in the sense of the application preferably includes spraying, immersion, foulard processing, lacquering and painting.

Preferably, the nonwoven is contacted by soaking or immersion. Preferably, the contacted nonwoven is squeezed until the weight of the contacted nonwoven is in a range of from 110 to 200% of the non-contacted nonwoven.

Preferably, the drying temperature is in a range of from 120 to 150 °C. The duration of the drying step may preferably be in a range of from 30 to 300 s.

### Example:

A composition 1 comprising 30 g of dimethicone (350 cSt.), 0,4 g polyglyceryl-3 stearate as an emulsifier and 69,6 g water was prepared and stirred until an emulsion was received.

A composition 2 comprising 30 g liquid paraffine, 0,4 g polyglyceryl-3 stearate as an emulsifier and 69,6 g water was prepared and stirred until an emulsion was received.

Three pieces of square-shaped SMS nonwoven with an edge length of 10 cm were prepared by a cut & seal process. The unit weight per area for the spunbond layers was 20 g/m² each. The unit weight per area for the meltblown layer was 200 g/m². The thickness of the overall nonwoven was 2 mm. The material of all layers was isotactic polypropylene.

Two of the pieces were immersed and soaked in compositions 1 and 2, respectively. After soaking, the pieces were squeezed until the weight was 330 g/m².

The resulting pieces were dried at 130 °C for 60 s. The water content was 0.8 wt.%.

After this, the impregnated pieces and the non-treated piece of nonwoven were immersed in olive oil for 60 s. After that the pieces were removed and drained until no further drops of olive oil were dropping off the respective pieces.

The results were as follows:

| | Composition 1 | Composition 2 | Not treated |
|---|---|---|---|
| Oil absorption 1 | 825 | 1132 | 750 |
| Oil absorption 2 | 787 | 866 | 731 |

Oil absorption is given in wt.% of the original dried piece.
Oil absorption 1 was oil at room temperature.
Oil absorption 2 was oil at 60 °C.

## Claims

1. Impregnated nonwoven for degreasing food, comprising at least a nonwoven and an impregnating composition, wherein the impregnating composition comprises only food grade components and at least an oleophilic substance and an emulsifier.

2. Nonwoven according to claim 1, **characterized in that** the oleophilic substance is selected from wax and derivatives, silicone and derivatives, and mixtures thereof.

3. Nonwoven according to any one of the previous claims, **characterized in that** the emulsifier is selected from thickeners, polysaccharides, surfactants, polysorbate 20, ceteareth 20 or mixtures thereof.

4. Nonwoven according to any one of the previous claims, **characterized in that** the ratio of emulsifier to oleophilic substance is in a range from 1:1 to 300.000, in particular from 1:10 to 1:2000.

5. Nonwoven according to any one of the previous claims, **characterized in that** the impregnated nonwoven comprises 1 to 30 wt.% impregnating composition.

6. Nonwoven according to any one of claims 3 to 5, **characterized in that** the surfactant is selected from calcium lignin sulfonate or copolymer condesates of ethylene oxide and propylene oxide.

7. Nonwoven according to any one of claims 3 to 5, **characterized in that** the polysaccharide has a mannose backbone.

8. Nonwoven according to any one of the previous claims, **characterized in that** the thermoplastic nonwoven is spunbond, meltblown or a combination thereof.

9. Process for degreasing food, **characterized in that** the food is contacted with the impregnated nonwoven according to any of claims 1 to 8.

10. Process for manufacturing the impregnated nonwoven according to any of claims 1 to 8, **characterized in that** in comprises at least the following steps:
a. contacting a thermoplastic nonwoven with a water based emulsion of the oleophilic substance comprising the emulsifier, and
b. drying the thermoplastic nonwoven.
